Europäisches Patentamt

European Patent Office

Office européen des brevets

(19)

(11) Veröffentlichungsnummer: **0 187 985**

**A1**

(12) # EUROPÄISCHE PATENTANMELDUNG

(21) Anmeldenummer: 85116280.0

(22) Anmeldetag: 19.12.85

(51) Int. Cl.⁴: **G 05 B 19/04**

(30) Priorität: 19.12.84 HU 471784

(43) Veröffentlichungstag der Anmeldung:
23.07.86 Patentblatt 86/30

(84) Benannte Vertragsstaaten:
AT BE CH DE FR GB IT LI LU NL SE

(71) Anmelder: Telefongyár
Hungária krt. 126-132
Budapest XIV(HU)

(72) Erfinder: Halmi, Gabor, Dipl.-Elek.
Tinody u.9-11
Budapest IX(HU)

(72) Erfinder: Vitez, György
Beller I. u. 120
Budapest XV(HU)

(72) Erfinder: Barta, Pal, Dipl.-Elek.
Dobsina u. 6/b
Budapest XII(HU)

(74) Vertreter: Eitle, Werner, Dipl.-Ing. et al,
Hoffmann, Eitle & Partner Patentanwälte Arabellastrasse 4
D-8000 München 81(DE)

(54) Verfahren und Schaltungsanordnung zur Gestaltung einer Schaltung für Reihenfolgesteuerung unter Anwendung eines rückgekoppelten Speichers.

(57) Die Erfindung betrifft ein Verfahren zur Gestaltung einer Reihenfolgesteuerschaltungsanordnung unter Anwendung eines rückgekoppelten Speichers im Laufe dessen zunächst die zu unterscheiden gewünschten Zustände mit Zustandszeichen versehen werden, und aufgrunde deren ein Zustandsgraph aufgezeichnet wird.

Das Wesen der Erfindung besteht darin, dass nachdem die Kodierung der Zustände beendigt worden ist, zunächst aufgrund des Zustandsgraphs die Signale bestimmt werden, deren Anzahl wenigstens der Anzahl der Zustände der gewünschten Reihenfolgesteuerungen nach dem Logarithmus an der 2-Basis entspricht, wonach die Signale von den Ausgängen des Speichers zu weiteren Adresseneingängen mit Ausnahme bestimmter Adresseneingänge rückgekoppelt werden; auf diese Weise wird die Anzahl der Adresseingänge des Speichers und der weiteren rückkoppelnden Adresseingänge bestimmt, wonach die zur Funktion des Speichers nicht ausgenützten Zustände als Obergangszustände gewertet werden; demnach wird das Schaltbild des Steuerstromkreises mit allen den Ausgängen und Eingängen des Speichers aufgrund deren Bestimmung nach dem Zeitdiagramm aufgezeichnet; der Inhalt eines Faches des Speichers wird so gewählt, daß an den rückgekoppelten Ausgängen der Kode des nächsten, von den Adresseingängen und den weiteren Adresseingängen abhängigen Zustands erscheint, während an den nicht rückgekoppelten Ausgängen die den gewünschten Ergebnissignalen entsprechenden Kode erzeugt werden, wonach der Inhalt des Speichers durch die tabellierte Kodierung der der Aufgabe entsprechenden Funktionen bestimmt wird.

Die Erfindung betrifft weiter eine Schaltungsanordnung zur Gestaltung eines Reihenfolgesteuerstromkreises unter Anwendung eines rückgekoppelten Speichers, deren Speicher über Bedingungseingänge und Ergebnisausgänge verfügt.

Das Wesen der Schaltungsanordnung besteht darin, dass die Rückkopplungsausgänge – deren Anzahl mindestens der Anzahl der gewünschten Reihenfolgesteuerungen nach dem Logarithmus auf der 2-Basis entspricht – ausser den Bedingungseingängen, die mit den Adresseingängen verbunden sind, zu weiteren Adresseingängen – deren Anzahl der Anzahl der Rückkopplungsausgänge entspricht – rückgekoppelt sind, desweiteren alle Ausgänge des Speichers die Ergebnisausgänge der Schaltungsanordnung bilden.

./...

EP 0 187 985 A1

Fig. 4c.

<u>Verfahren und Schaltungsanordnung zur Gestaltung einer
Schaltung für die Reihenfolgesteuerung unter Anwendung
eines rückgekoppelten Speichers</u>

Die Erfindung betrifft ein Verfahren und eine Schaltungsanordnung zur Gestaltung eines Reihenfolgesteuerstromkreises unter Anwendung eines rückgekoppelten Speichers. Die erfindungsgemässe Steuerschaltung und das zur Realisierung derselben geeignete Verfahren können insbesondere zur Verwirklichung von digitalgesteuerten Reihenfolgenetzen bei elektronischen Anlagen vorteilhaft verwendet werden.

Wie es wohlbekannt ist, werden zur Gestaltung der Steuerstromkreise der digitalgesteuerten Reihenfolgennetze in elektronischen Anlagen Mikroprozessorsysteme weitgehend verwendet. In den die erwähnten Systeme technisch-wirtschaftlich analysierenden Studien werden die Systeme so ausgewertet, daß die Verwendung der Mikroprozessorsysteme ausschliesslich bei der Planung und Ausbau komplizierter Anlagen wünschenswert ist. Der Grad der Kompliziertheit kann durch die Anzahl der Spitzenpunkte und Kanten des für die Funktionen der Anlage charakterisierenden Zustandsgraphs gekennzeichnet bzw. beschrieben werden. Wenn aufgrund der erwähnten Charakteristiken bzw. sonstiger Parameter (z.B. Reaktionszeit) die Realisierung der Steuerung mit Mikroprozessor nicht zweckdienlich scheint, tritt die die Planung mit den diskreten logischen Stromkreisen in den Vordergrund. Im allgemeinen enthalten derartige Steuernetze Kombinationsstromkreise, die die Übergänge zwischen Funktionsbedingungen und Steuerzuständen ausbilden, desweiteren ein   aus einem elementären Speicher   (in der
Mehrheit der Fälle ein JK-Stromkreis) aufgebautes Zustandregister zur Speicherung der aktuellen Steuerzustände.

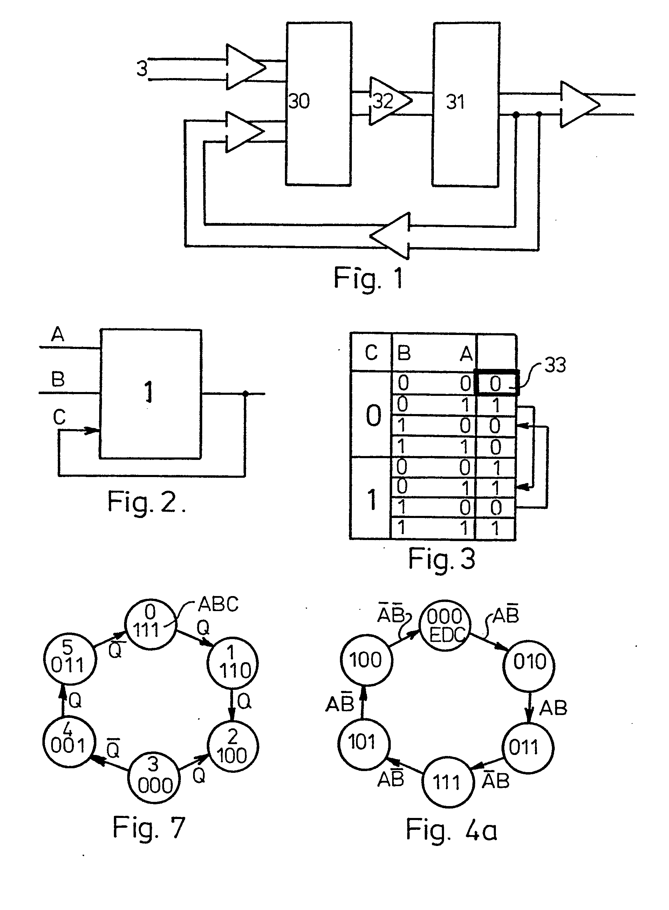

Die obengeschilderten Lösungen sind z.B. in Kapiteln 15-17
des Fachbuches "Logische Systeme und sequentielle Automaten"
/Verfssser: Dr. Szittya Ottó; Lehrbuchverlag, Budapest,
1975/ aufzufinden. Die allgemeine Anordnung ist in Figur 1
dargestellt.

Die Planung der aus den obenerwähnten diskreten Elementen
ausgebildeten Steuernetze stellt eine äusserst komplizierte Aufgabe dar; insbesondere wenn eine schnelle Funktion
gefordert wird, muss - recht nachteilig - eine hohe Anzahl
von parallelen Stromkreiselementen verwendet werden. Ein
bedeutender Nachteil bei diesen Schaltungsanordnungen besteht darin, dass die Erweiterung des Netzes, eine Weiterentwicklung aufgrund neuer Parameter ausschliesslich durch
die Wiederholung des vollkommen Planungsalgorithmus möglich
ist; weiterhin kann die im Laufe der Planung nach Bedarf
eingebaute Paralellität (Redundanz) zu sonstigen Funktionen
keinesfalls verwendet werden. Ein nicht unwesentlicher Nachteil besteht weiter darin, dass die Kontrolle des Steuernetzes ausschliesslich mit äusseren Mitteln und nur mit
Schwierigkeiten gewährleistet werden kann. Reparatur und
Fehlersuche sind kompliziert und zeitaufwendig.

Unter Berücksichtigung der erwähnten Mangelhaftigkeiten neigen die Projekteure - abgesehen von Fällen mit besonders
kritischer Tempierung - zur Präferenz der wirtschaftlich
teuereren, aber technisch nicht immer motivierten Steuersysteme mit Mikroprozessoren. Als Erfolg gestalteten sich
solche Systeme, die Mikroprozessoren, Speicher, Peripherieanpassungen, Steuerungen und die dazu erforderlichen diskreten Stromkreise enthalten. Solche Lösungen sind z.B. in
"Intel User Manual" 75. oder im Buch  "Mikroprozessorelemente für die Planung" Vancsó, Gyula, Technischer Verlag,
1984 beschrieben. Die Kompliziertheit der derweise entstandenen Steuerstromkreise ist mit den aus diskreten Elementen aufgebauten Anlagen verglichen kaum geringer, wobei auf Kosten der oft aus 10-20 integrierten Stromkreisen
bestehenden, zur Versorgung der Aufgaben der Reihenfolgesteuerung funktionell überflüssigen und unausgenützten Mikroprozessoren nur gewisse Vereinfachungen in der Hinsicht
der Planung, Schaltungstechnik erreicht werden können. Die
dadurch erreichbaren Vorteile motivieren in der Mehrheit
der Fälle keinesfalls den Komfort bei der Planung zu Lasten
der Wirtschaftlichkeit  auch die individuellen Lösungen
sind oft unmotiviert.

In Kenntnis des Stands der Technik schien es zweckmässig
zu sein, ein Verfahren und eine Schaltungsanordnung auszubilden, unter Zuhilfenahme deren die Mangelhaftigkeiten
der obenbeschriebenen Lösungen eliminiert werden und die Vorteile behaltend und vereinigt für die Projekteure eine günstige, wirtschaftliche, leicht planbare und prüfbare Lösung
zur Verfügung gestellt werden kann.

Werden die herkömmlichen Schaltungsanordnungen mit   diskreten Stromkreisen überprüft, so kann festgestellt werden,
dass die Bits der Eingangsbedingungen über einen Kombinationsstromkreis in das Zustandspeicherregister eingegeben werden.
Dieser Kombinationsstromkreis stellt jenen Teil des Steuerstromkreises dar, der der gegebenen Aufgabe entsprechend
und die momentane Stellung des Zustandsregisters berücksichtigend den neuen oder den vorherigen Zustand dadurch bestimmt,
was für ein Zustandskode an dem Ausgang des Kombinationsnetzes
erscheint. Üblicherweise wird der Kombinationsstromkreis aus
Torschaltungen oder ROM-Stromkreisen erzeugt. Die Gestaltung
der Kombinationsstromkreise aus ROM-Stromkreisen führte zu
der Erkenntnis, daß jedwelcher Kombinationsstromkreis und
der Speicher als Speicherreihe durch ein und dasselbe Element
gebildet werden können, das zur Versorgung einer doppelten Funktion, d.h. der Aufgaben des Registers und des Kombinationsstromkreises geeignet ist. Eine derartige Lösung ist in der Fachliteratur nicht aufzufinden.

Unter Anwendung des erfindungsgemäßen Steuerstromkreises und des zur Realisierung desselben dienenden Verfahrens können auch verhältnismässig komplizierte Zustandsgraphen mit geringzahligen Stromkreiselementen, ohne die Verwendung eines Mikroprozessorsystems, gleichzeitig aber die sich aus den Programmierungsmöglichkeiten ergebende Flexibilität und Geschwindigkeit der diskreten Systeme annähernd behaltend, verwirklicht werden.

Das Wesentliche der neuen Erkenntnis liegt darin, daß das Zustandspeicherregister erfindunsgemäss unter Anwendung des Speichers so realisiert werden kann, daß von dem Ausgang ein oder mehrere Bits der Eingangsadressenleitung angeschlossen werden. Wenn nun von dem Speicherausgang ein Bit zu dem Adresseneingang rückgeführt wird, wird die Fläche des Speichers durch diese Massnahme in zwei Teile unterteilt, wobei die übrigbleibenden Eingangsbitkombinationen je nachdem immer andere Ausgänge bilden, an welcher Hälfte des Speichers man sich "befindet". Der Übergang zwischen den Speicherhälften wird durch das Rückkopplungsbit gewährleistet. Sollen nicht nur ein, sondern mehrere Bits rückgekoppelt werden, wird die Fläche des Speichers auch in mehrere Teile unterteilt. In solchen Fällen findet der Übergang zwischen den einzelnen Vierteln, Achteln usw. des Speichers statt. Zu derselben Kombination der Eingangsbedingungen gehören immer andere Ausgänge, immer in der Abhängigkeit des eben aktuellen Speicherteils.

Die Erfindung bezieht sich auf ein Verfahren zur Gestaltung einer Schaltungsanordnung zur Steuerung der Reihenfolge unter Anwendung eines rückgekoppelten Speichers, im Laufe dessen zunächst die zu unterscheiden gewünschten Zustände mit Zustandszeichen versehen werden und aufgrund deren der Zustandsgraph konstruiert wird.

Das Wesentliche der Erfindung zeigt sich darin, daß, nachdem der Zustand kodiert worden ist, aufgrund des Zustandsgraph die Anzahl der Signale - die der Anzahl der Zustände der gewünschten Reihenfolgesteuerungen nach dem Logarithmus auf 2-Basis entspricht - bestimmt wird und die Signale von den Ausgängen des Speichers zu weiteren Eingängen ausserhalb der Bedingungseingänge des Speichers rückgekoppelt werden. Auf diese Weise wird die Anzahl der Bedingungseingänge des Speichers und der Rückkopplungseingänge bestimmt. Die zur Funktion des Speichers nicht ausgenützten Zustände werden als Übergangzustände gewertet, mit denen das System zweckmässig in einen stabilen Zustand eingestellt werden kann. Demnach wird das Schaltbild des Steuerstromkreises aufgezeichnet mit allen Eingängen und Ausgängen des Speichers, aufgrund ihrer Aufgabe nach dem Zeitdiagramm. Darauffolgend wird der Inhalt eines Faches des Speichers so gewählt, daß man an den rückgekoppelten Ausgängen den Kode des neuen, von den Zustandeingängen abhängigen Zustands erscheinen lässt, während an den nicht rückgekoppelten Ausgängen die den gewünschten Ergebnissignalen entsprechenden Kode erzeugt werden. Die Bestimmung des Speicherinhalts erfolgt durch Kodierung der der Aufgabe entsprechenden Funktionen in der Tabelle.

Desweiteren betrifft die Erfindung eine Schaltungsanordnung zur Gestaltung eines Steuerstromkreises der Reihenfolge unter Anwendung eines rückgekoppelten Speichers, dessen Speicher mit Bedingungseingängen und Ergebnisausgängen ausgestaltet ist.

Desweiteren besteht das Wesentliche der Erfindung darin, dass die Rückkopplungsausgänge - deren Anzahl mindestens der Anzahl der gewünschten Reihenfolgesteuerungen nach dem Logarithmus auf 2-Basis entspricht - ausser den Bedingungseingängen zu weiteren Adresseneingängen des Speichers -

**0187985**

deren Anzahl der Anzahl der Rückkopplungsausgänge entspricht - rückgekoppelt sind. Alle Ausgänge des Speichers bilden die Ausgänge der Schaltungsanordnung.

Bei einer vorteilhaften Ausführung der Erfindung sind die Bedingungseingänge und die Rückkopplungseingänge mit den Eingängen des Taktgeberstromkreises verbunden, wobei die Ausgänge des Taktgeberstromkreises sich den Eingängen des Speichers anschliessen.

Bei einer weiteren vorteilhaften Ausführung der Erfindung schliessen sich die Ausgänge des Speichers den Eingängen des Taktgeberstromkreises an, während die Ausgänge des Zeitgeberstromkreises die Erfolgsausgänge bilden und die rückgekoppelten Eingänge sich dem Rückkoppelausgang des Zeitgeberstromkreises anschliessen.

Mit den traditionellen Lösungen verglichen weisen das erfindungsgemässe Verfahren und die zur Realisierung dessen dienende Schaltungsanordnung die folgenden Vorteile auf:

- Beantwortungszeit (Verzögerungszeit) des Steuerstromkreises ist minimal bzw. kann in der Abhängigkeit des gewählten Zeitimpulses beliebig eingestellt werden.

- Durch die Aenderung des Speicherprogramms kann dieselbe Hardware auch zur Lösung anderer Steueraufgaben verwendet werden.

- Der ganze sequentielle Stromkreis kann aus 1-2 integrierten Stromkreiselementen zusammengestellt werden, die Anzahl der zur Verwendung kommenden Stromkreiselemente, Verkabelungen und Lötungen ist minimal, wodurch die Zuverlässigkeit des gesamten Systems erhöht wird.

- Die Planung kann leicht algorithmisiert werden, so kann diese über die richtige Wahl des Zustandsgraphs auch mit einem entsprechenden Computerprogramm gelöst werden.

- Die erfindungsgemässe Gestaltung der Schaltungsanordnung ist weitgehend billiger als die traditionell aufgebauten, zu ähnlicher Bestimmung dienenden Stromkreise, insbesondere, wenn man berücksichtigt, dass der Preis der erfindungsgemässen Schaltungsanordnung auf 1/4 - 1/5 des
Preises der herkömmlichen Anordnungen verringert werden
kann.

- Der erfindungsgemässe Steuerstromkreis kann insbesondere
in den folgenden Fällen vorteilhaft Verwendung finden:
Bei apparateproduzierenden Unternehmen zur Gestaltung
der universellen Hardwarestruktur der in Gross-Serien
produzierten Steuerstromkreise für verschiedene Automatisierungs-, messtechnische-, leitungstechnische-. und rechentechnische Mittel. Auf diese Weise zeigt sich auf
dem Gebiet der Planung, Produktion und Servicedienstleistung neben der bedeutenden Ersparung an lebendiger Arbeit,
sich aus der einfachen Schaltungstechnik des Stromkreises
ergebend, eine bedeutende Ersparung an Material und Kosten.

- Auf dem Gebiet der Forschung und Entwicklung können unter
Anwendung der erfindungsgemässen Lösung Versuchsmusterstücke
als individuelle Steuerungen hergestellt werden. -
Standpunkt der Wirtschaftlichkeit ist es äusserst vorteilhaft, wenn verschiedene Steuerstromkreise von geringer
Zahl aufgrund derselben einfachen und billigen Schaltungsanordnung ausgestaltet sind und die Aenderungen im wesentlichen bloss von Software-Charakter sind.

Die Erfindung wird anhand eines vorteilhaften Ausführungsbeispiels mit Hilfe der beiliegenden Zeichnungen näher erläutert. Es zeigen:

Figur 1 das Blockschema der mit an sich bekannten diskreten
Stromkreisen aufgebauten Steuerstromkreise,

Figur 2 das Blockschema einer möglichen Ausführung des erfindungsgemässen rückgekoppelten $2^3 \times 1$ Bit-Speichers,

Figur 3 die Algorithmen des durch Rückkoppelung in zwei Hälfte unterteilten Speichers nach Figur 2,

Figur 4a einen als Beispiel gezeigten bekannten Zustands-

graph,

Figur 4b den mit dem erfindungsgemässen rückgekoppelten
Speicher ausgestalteten Speicherinhalt,

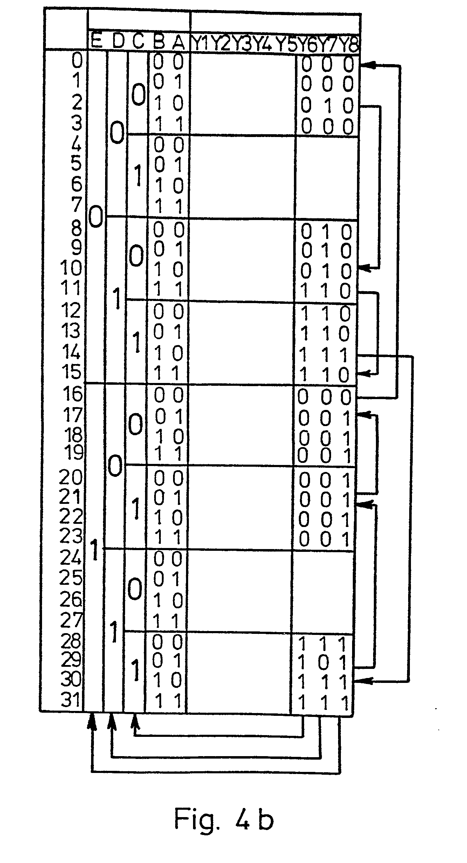

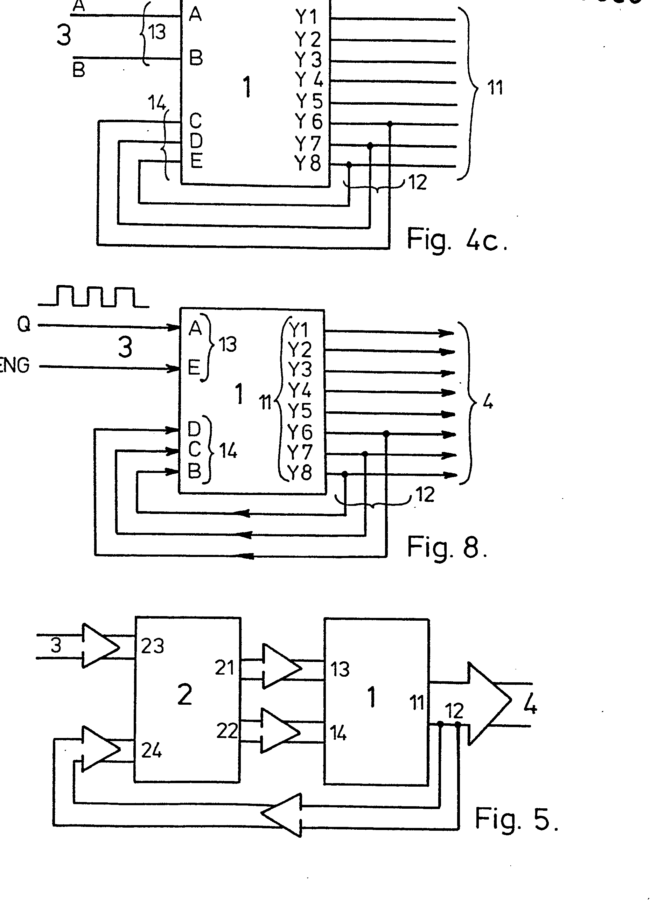

Figur 4 c die zu dem Speicherinhalt nach Figur 4 gehörende Schaltunganordnung,

Figur 5 den der erfindungsgemässen Schaltungsanordnung entsprechenden Steuerstromkreis, der aus dem Speicher
und dem Zeitgeberstromkreis aufgebaut ist,

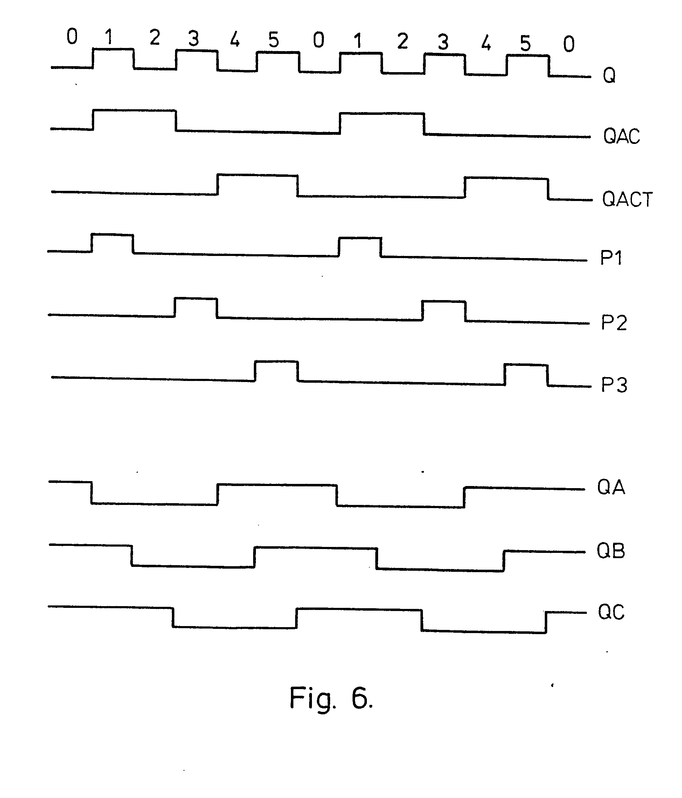

Figur 6 das Zeitdiagramm eines dreiphasigen elektronischen
Taktgebers,

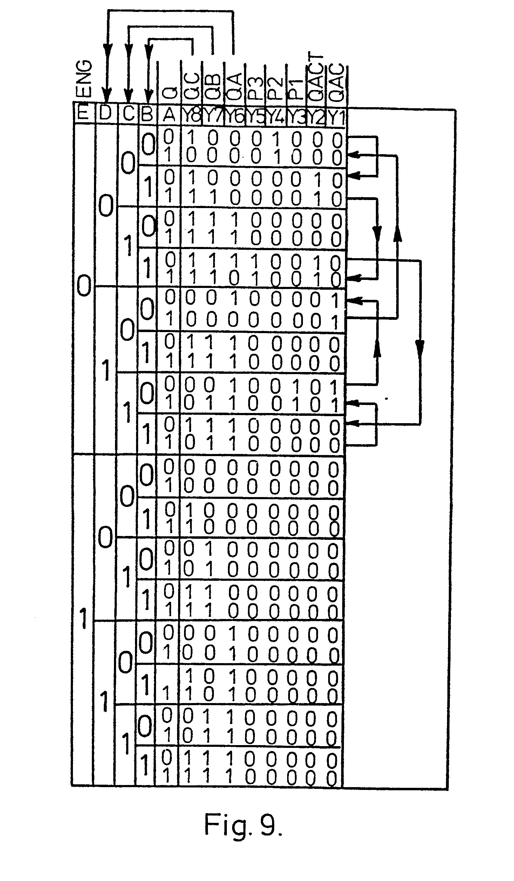

Figur 7 das Zustandsdiagramm des dreiphasigen elektronischen
Taktgebers nach Figur 6,

Figur 8 das Schaltbild des dreiphasigen elektronischen Taktgebers nach Figuren 6 und 7,

Figur 9 die Tabelle des Speichers des dreiphasigen Taktgebers nach Fig. 6-8.

In Figur 1 ist das Blockschema eines traditionellen diskreten Steuerstromkreises dargestellt. Die Bits des Bedingungseingangs 3 gelangen über den Kombinationsstromkreis 30 zu
dem Zustandspeicherregister 31. Der Kombinationsstromkreis
30 stellt jenen Teil der Steuerschaltungsanordnung dar, der, der
gegebenen Aufgabe entsprechend, die momentane Stellung (Iststellung) des Zustandspeichers 31 berücksichtigend den neuen
oder den früheren Zustand bestimmt, undzwar dadurch, wasfürein Zustandskode an dem Ausgang 32 des Kombinationsstromkreises 30 erscheint.

Erfindungsgemäss wird das zustandspeichernde Register unter Anwendung des Speichers so realisiert, - siehe Figur 2
- daß von dem Ausgang KI des Speichers 1 ein oder mehrere
Bits zu der Eingangsadressleitung rückgeführt werden. Bei
der Anordnung nach Figur 2 wird eine einzige Leitung zu einem der Eingänge A,B,C rückgekoppelt. Wenn nun von dem Ausgang KI des Speichers 1 ein Bit zu dem Adresseingang C rückgekoppelt wird, wird die Fläche des Speichers 1 eigentlich in zwei Teile unterteilt, wobei die übrigbleibenden Eingangs-Bitkombinationen je nachdem immer andere Ausgänge ergeben, in welcher Hälfte des Speichers man sich eben "befindet". Der Übergang zwischen den Speicherhälften wird durch das rückgekoppelte Bit gewährleistet ( siehe Fig. 3). Das Fach 33 des Speichers 1 enthält die zu der gegebenen Adresskombination gehörende Ausgangskombination, in der Figur ist das Fach 33 dargestellt, das z.B. von Nullwert ist. Wenn nun nicht ein Bit, sondern mehrere (k) Bits rückgekoppelt werden, wird auch die Fläche des Speichers in mehrere ($2^k$) Teile unterteilt. In solchen Fällen findet der Übergang zwischen den einzelnen Vierteln, Achteln usw. des Speichers statt (siehe Figur 4a-4b) . In Abhängigkeit des eben aktuellen Speicherteils können zu derselben Kombination der Eingangsbedingungen immer andere Ausgänge gehören. Ein der Figur 1 entsprechender Stromkreis kann mit einem einzigen Element - mit dem rückgekoppelten Speicher - realisiert werden, der die einzelnen Funktionen - Kombinationsstromkreis, Zustandspeicherung - erfüllt. Bei dieser Lösung können die Zustandsspeicherung und Rückführung des momentanen Zustands zu dem Eingang des Kombinationsstromkreises simultan durch Rückkopplung realisiert werden, während der Kombinationsstromkreis der Erfolg des in die einzelnen Viertelteile, Achtelteile usw. des Speichers eingeschriebenen Speicherinhalts ist. In Figur 4 a ist der als Beispiel dienende Zustandsgraph dargestellt, in dem die verschiedenen Steuerungszustände mit in Kreise eingeschriebenen Kodekombinationen bezeichnet sind. Die die Übergänge zwischen diesen die Steuerungszustände erzeugenden Eingangsbedingungskombinationen sind mit der Kombination der AB-Bedingungen bezeichnet.

Figur 4b zeigt den Speicherinhalt nach Figur 4c, was eigentlich die Realisierung des Zustandsgraphs nach Figur 4a dargestellt.

Bei der Lösung nach Figur 4c kann auf Wirkung der Aenderung

- 10 -

0187985

der AB Eingangsbedingungen die Ausgangsänderung bzw. die Zustandsänderung sogar sofort während der Dauer der Verzögerung der Torschaltung erfolgen. Eine so schnelle Reaktion - die ansonsten nur schwierig erreicht werden kann - ist in der Mehrheit der Fälle überhaupt nicht erforderlich, ja sogar ist sie manchmal ausdrücklich nachteilig. Wenn z.B. während der Beantwortungsdauer des verwendeten Speichers 1 an den rückgekoppelten Ausgängen unbestimmte Kombinationen auftreten, kippt der Zustandsspeicher unbefriedigenderweise um, die sequentielle Funktion kann "zusammenfallen". Diese Erscheinung kann so vermieden werden, daß ein schnell funktionierender z.B. bipolarer ROM verwendet wird, und es wird gewährleistet, dass anlässlich der Zustandsänderungen die Kode der einander folgenden Zustände nur um ein einziges Bit voneinander abweichen. Kann diese Möglichkeit nicht gesichert werden, scheint es zweckmässig zur Vermeidung der fehlerhaften Funktionen einen Zeitgeberstromkreis 2 vor den Eingängen des Speichers 1 oder nach den Ausgängen des Speichers 1 einzusetzen.

Den einzelnen Adresseingängen 13A,B des erfindungsgemäss ausgestalteten Speichers 1 schliessen sich die Bits der Steuerbedingungen 3 an, während den weiteren Adresseneingängen 14 C,D,E eine von den Ausgängen 11 Y1-Y8 rückgeführte Zustandsleitung wenigstens eines Rückkopplungsausgangs 12 angeschlossen ist. Der zu diesen Adressen gehörende Inhalt 33 des Speichers enthält nicht nur die die Ergebnissignale 4 liefernden Erfolgsausgänge 11, sondern auch den nächsten Steuerungszustand. Auf diese Weise können mit dem rückgekoppelten Speicher 1 als einzigem funktionellen Element zwei Funktionen realisiert werden: undzwar jene des Kombinationsnetzes 30 und des zustandspeichernden Registers 31 (siehe Figur 1), da der Inhalt des Faches 33 des zu der gegebenen Adresse gehörenden Speichers 1 je eine logische Funktion bedeutet. Die zu derselben Adresse gehörenden, durch die Rückkopplung getrennten verschiedenen Zustände sichern hingegen die Speicherung der Zustände.

Das Schaltbild in Figur 5 stellt die Schaltungsanordnung des erfindungsgemässen Speichers 1 dar. Diese Schaltungsanordnung enthält den Speicher 1 sowie den nach Bedarf zur Verwendung kommenden Zeitgeberstromkreis 2.

Wie es aus der Figur 5 ersichtlich ist, weist der Speicher 1 wenigstens einen Adresseingang 13 und wenigstens einen weiteren Adresseingang 14 auf; desweiteren sind wenigstens ein Ergebnisausgang 11 und ein davon getrennter Rückkopplungsausgang 12 vorgesehen.

Der Zeitgeberstromkreis 2 weist wenigstens einen Bedingungseingang 23 und wenigstens einen Rückkopplungseingang 24, desweiteren wenigstens einen Steuerausgang 21 und wenigstens einen Zustandsausgang 22 auf.

Der vorhandene wenigstens eine Bedingungseingang 3 schliesst sich dem Steueradresseingang 13 an, bzw. wenn ein Zeitgeberstromkreis 2 vorhanden ist, ist er dem Bedingungseingang 23 angeschlossen. Der Rückkopplungsausgang 12 ist mit dem einen weiteren Adresseingang 14 bildenden Zustandseingang - bzw. beim Vorhanden eines Zeitgeberstromkreises 2 - mit dem Rückkopplungseingang 24 verbunden. Wenn ein Zeitgeberstromkreis 2 eingesetzt wird, schliessen sich dem Steueradresseingang 13 der Steuerausgang 21, dem den weiteren Adresseneingang 14 bildenden Zustandseingang der Zustandsausgang 22 an. Die Erfolgausgänge 11 des Speichers 1 liefern die Bits der zu erzeugen gewünschten Steuer-Ergebnissignale 4. Wenn zwecks Vermeidung der fehlerhaften Funktion und Hasarden die Verwendung eines Zeitgeberstromkreises 2 beansprucht wird, ist der Zeitgeberstromkreis 2 so auszubilden, dass der Steuerausgang das verzögerte/tempierte Aequivalent des Bedingungseingangs 23 und der Zustandsausgang 22 das verzögerte/tempierte

Aequivalent des rückgekoppelten Eingangs 24 darstellen.

Der Inhalt irgendeines Faches  33 des Speichers 1, der durch den Adresseneingang 13 und den weiteren Adresseneingang 14 bestimmt ist, bedeutet die von dem Zustandsgraph erforderte Ausgangskombination.

Aufgrund des Blockschemas nach Figur 5 ist die Wirkungsweise der Schaltungsanordnung die folgende: Die dem momentanen Zustand des die Schaltungsanordnung realisierenden Steuerstromkreises entsprechende Kodekombination erscheint an dem Rückkopplungsausgang 12. Diese Kodekombination gelangt unmittelbar zu dem weiteren Adresseneingang 14 des Speichers 1, oder wenn ein Zeitgeberstromkreis 2 vorhanden ist, mit einer Tempierung bzw. Verzögerung und bringt dadurch die von dieser Kodekombination definierte Speicherfläche zur Geltung. Nun ergibt der Inhalt des von den Steueradresseingängen 13 definierten Speicherfaches 33 die Ergebnisausgänge 11 und die davon getrennten Rückkopplungsausgänge 12 innerhalb der zur Geltung gebrachten Speicherfläche.

Dieser Zustand und die diesem entsprechende Kodekombination werden solange aufrechterhalten, bis zu dem Steueradresseingang 13 des Speichers eine einen von dem gegenwärtigen abweichenden Zustand auslösende Steuerung ankommt.

Wenn die Bedingungseingänge 3 die Aenderung des momentanen Zustands hervorrufen, enthält das zur Geltung gebrachte Fach 33 des Speichers den Zustandskode des neuen Zustands an den rückgekoppelten Ausgängen 12.

Mit Hilfe eines weiteren einfachen Ausführungsbeispiels werden Art und Weise der Gestaltung des erfindungsgemässen Steuerstromkreises näher erläutert.

Es wird angenommen, daß der zu relaisierende Stromkreis ein dreiphasiger elektronischer Taktgeber ist, der aus dem Eingangstaktsignal Q die Signale nach Figur 6 erzeugt.

Als erster Schritt werden die zu unterscheiden gewünschten Zustände - wie es in der Figur 6 ersichtlich ist - mit den Zustandszeichen 0 bis 5 versehen. Der daraus aufzuzeichnende Zustandsgraph ist in Figur 7 dargestellt. Nach erfolgter Kodierung des Zustands und die Kode in das Zustandsgraph in Figur 7 einschreibend kann die Anzahl der Rückkopplungsausgänge 12 und der Adresseingänge 13 bestimmt werden. Nachdem die Kodierung der Zustände durchgeführt worden ist, werden Signale bestimmt, deren Anzahl wenigstens der Anzahl der Zustände der gewünschten Reihenfolgesteuerungen nach dem Logarithmus auf der 2-Basis entspricht - die Bestimmung erfolgt aufgrunde des Zustandsgraphs - wonach die derweise bestimmten Signale ausser den Bedingungseingängen 3 des Speichers 1 auch zu den weiteren Adresseingängen 14 rückgekoppelt werden. Auf diese Weise wird die Anzahl der Rückkopplungsausgänge 12 bestimmt.

In dem nächsten Schritt wird die erforderliche Minimalgrösse des Speichers 1 bestimmt aus der Einfachheit des Beispiels geht es eindeutig vor, dass zur Lösung der Aufgabe ein 16 x 8 Bit-Speicher genügt.

Danach werden die zur Funktion nicht ausgenützten Zustände kodiert. Es ist zweckmässig, wenn die beiden, zur Funktion nicht verwendeten Zustände (101,010) als Übergangszustände gewählt werden, aus denen das System in den stabilen Zustand 111 rückgestellt wird.

Jetzt kann das Schaltbild des derweise bestimmten, mit dem Speicher 1 ausgestalteten Steuerstromkreises leicht aufgezeichnet werden. Diese Schaltungsanordnung ist in Figur 8

0187985

dargestellt, wobei alle die Eingänge A-E des Speichers 1, die Anzahl der Ausgänge Y1-Y8 sowie die Bestimmungen QAC-QC nach dem Zeitdiagramm angeführt sind.

Der Inhalt des Faches 33 des Speichers 1 ist so zu wählen, dass an den durch die Rückkopplungsausgänge QA,QB,QC 12 bestimmten Speicherteilen ein neuer, von den die weiteren Adresseingänge 14 bildenden Zustandseingängen abhängiger Zustandskode vorhanden sei, während an den nicht rückgekoppelten Ausgängen Y1-Y5 die den gewünschten Erfolgsignalen 4 entsprechenden Kode erscheinen. Zuletzt besteht die Aufgabe in der Bestimmung des Inhalts des Speichers 1, d.h. die Kodierung der der Aufgabe entsprechenden Funktionen.

Figur 9 stellt eine mögliche Lösung der gegebenen Aufgabe tabelliert aufgrund der entsprechenden Kode dar.

Verfahren und Schaltungsanordnung zur Gestaltung einer
Schaltung für die Reihenfolgesteuerung unter Anwendung
eines rückgekoppelten Speichers

P a t e n t a n s p r ü c h e

1. Verfahren zur Gestaltung einer Reihenfolgesteuerschaltungsanordnung unter Anwendung eines rückgekoppelten Speichers, im Laufe dessen zunächst die zu unterscheiden gewünschten Zustände mit Zustandszeichen versehen werden, und aufgrund deren ein Zustandsgraph aufgezeichnet wird, d a d u r c h   g e k e n n z e i c h n e t , dass nachdem die Kodierung der Zustände beendigt worden ist, zunächst aufgrunde des Zustandsgraphs die Signale bestimmt werden, deren Anzahl wenigstens der Anzahl der Zustände der gewünschten Reihenfolgesteuerungen nach dem Logarithmus an der 2-Basis entspricht, wonach die Signale von den Ausgängen (11) des Speichers (1) zu weiteren Adresseneingängen (14) mit Ausnahme der Adresseneingängen (13) rückgekoppelt werden; auf diese Weise die Anzahl der Adresseingänge (13) des Speichers und der weiteren rückkoppelnden Adresseingänge (14) bestimmt wird, wonach die zur Funktion des Speichers (1) nicht ausgenützten Zustände als Übergangszustände gewertet werden; danach das Schaltbild des Steuerstromkreises mit allen Ausgängen und Eingängen des Speichers aufgrunde deren Bestimmung nach dem Zeitdiagramm aufgezeichnet der Inhalt eines Faches (33) des Speichers (1) so gewählt wird, daß an den rückgekoppelten Ausgängen (12) der Kode des nächsten, von den Adresseingängen (13) und den weiteren Adresseingängen (14) abhängigen Zustands erscheint. während an den nicht rückgekoppelten Ausgängen (11) die den gewünschten Ergebnissignalen (4) entsprechenden Kode erzeugt werden, wonach der Inhalt des Speichers (1) durch die tabellierte Kodierung der der Aufgabe entsprechenden Funktionen bestimmt wird.

Schaltungsanordnung zur Gestaltung eines Reihenfolgesteuerstromkreises unter Anwendung eines rückgekoppelten
Speichers, deren Speicher über Bedingungseingänge und Ergebnisausgänge verfügt, d a d u r c h   g e k e n n -
z e i c h n e t , dass die Rückkopplungsausgänge (12) -
deren Anzahl mindestens der Anzahl der gewünschten Reihenfolgesteuerungen nach dem Logarithmus auf der 2-Basis entspricht - ausser den Bedingungseingängen (3), die mit den
Adresseingängen (13) verbunden sind, zu weiteren Adresseingängen (14) - deren Anzahl der Anzahl der Rückkopplungsausgänge entspricht - rückgekoppelt sind, desweiteren alle
Ausgänge des Speichers (1) die Ergebnisausgänge (4) der
Schaltungsanordnung bilden.

3. Schaltunganordnung nach Anspruch 2, d a d u r c h   g e -
k e n n z e i c h n e t , dass die Bedingungseingänge (3)
sowie die Rückkopplungsausgänge (12) den Eingängen (23) des
Zeitgeberstromkreises (2)  bzw. dem rückgekoppelten Eingang
(24) angeschlossen sind, wobei die Ausgänge (21,22) des Zeitgeberstromkreises (2) mit den Eingängen (13,14) des Speichers (1) verbunden sind.

4. Schaltungsanordnung nach Anspruch 2, d a d u r c h   g e -
ke n n z e i c h n e t , dass die Ausgänge (11) des Speichers
(1) sich den Eingängen (23,24) des Zeitgeberstromkreises (2)
anschliessen, während die Ausgänge (21,22) des Zeitgeberstromkreises (2) anschliessen  und   die Ausgänge (21.22)
des Zeitgeberstromkreises (2) die Erfolgsausgänge (4) bilden, desweiteren die rückgekoppelten Eingänge (14) des Speichers (1) sich den Rückkopplungsausgängen (12) des Zeitgeberstromkreises (2) anschliessen.

Fig. 1

Fig. 2.

Fig. 3

Fig. 7

Fig. 4a

0187985

| # | E | D | C | B | A | Y1 | Y2 | Y3 | Y4 | Y5 | Y6 | Y7 | Y8 |
|---|---|---|---|---|---|----|----|----|----|----|----|----|----|
| 0 | 0 | 0 | 0 | 0 | 0 | | | | | | 0 | 0 | 0 |
| 1 | | | | 0 | 1 | | | | | | 0 | 0 | 0 |
| 2 | | | | 1 | 0 | | | | | | 0 | 1 | 0 |
| 3 | | | | 1 | 1 | | | | | | 0 | 0 | 0 |
| 4 | | | 1 | 0 | 0 | | | | | | | | |
| 5 | | | | 0 | 1 | | | | | | | | |
| 6 | | | | 1 | 0 | | | | | | | | |
| 7 | | | | 1 | 1 | | | | | | | | |
| 8 | | 1 | 0 | 0 | 0 | | | | | | 0 | 1 | 0 |
| 9 | | | | 0 | 1 | | | | | | 0 | 1 | 0 |
| 10 | | | | 1 | 0 | | | | | | 0 | 1 | 0 |
| 11 | | | | 1 | 1 | | | | | | 1 | 1 | 0 |
| 12 | | | 1 | 0 | 0 | | | | | | 1 | 1 | 0 |
| 13 | | | | 0 | 1 | | | | | | 1 | 1 | 0 |
| 14 | | | | 1 | 0 | | | | | | 1 | 1 | 1 |
| 15 | | | | 1 | 1 | | | | | | 1 | 1 | 0 |
| 16 | 1 | 0 | 0 | 0 | 0 | | | | | | 0 | 0 | 0 |
| 17 | | | | 0 | 1 | | | | | | 0 | 0 | 1 |
| 18 | | | | 1 | 0 | | | | | | 0 | 0 | 1 |
| 19 | | | | 1 | 1 | | | | | | 0 | 0 | 1 |
| 20 | | | 1 | 0 | 0 | | | | | | 0 | 0 | 1 |
| 21 | | | | 0 | 1 | | | | | | 0 | 0 | 1 |
| 22 | | | | 1 | 0 | | | | | | 0 | 0 | 1 |
| 23 | | | | 1 | 1 | | | | | | 0 | 0 | 1 |
| 24 | | 1 | 0 | 0 | 0 | | | | | | | | |
| 25 | | | | 0 | 1 | | | | | | | | |
| 26 | | | | 1 | 0 | | | | | | | | |
| 27 | | | | 1 | 1 | | | | | | | | |
| 28 | | | 1 | 0 | 0 | | | | | | 1 | 1 | 1 |
| 29 | | | | 0 | 1 | | | | | | 1 | 0 | 1 |
| 30 | | | | 1 | 0 | | | | | | 1 | 1 | 1 |
| 31 | | | | 1 | 1 | | | | | | 1 | 1 | 1 |

Fig. 4 b

0187985

Fig. 4c.

Fig. 8.

Fig. 5.

Fig. 6.

0187985

| ENG | | | | | Q | QC | QB | QA | P3 | P2 | P1 | QACT | QAC |
|---|---|---|---|---|---|---|---|---|---|---|---|---|---|
| E | D | C | B | A | Y8 | Y7 | Y6 | Y5 | Y4 | Y3 | Y2 | | Y1 |
| 0 | 0 | 0 | 0 | 0 | 1 | 0 | 0 | 0 | 1 | 0 | 0 | | 0 |
| | | | | 1 | 0 | 0 | 0 | 0 | 1 | 0 | 0 | | 0 |
| | | | 1 | 0 | 1 | 0 | 0 | 0 | 0 | 0 | 1 | | 0 |
| | | | | 1 | 1 | 1 | 0 | 0 | 0 | 0 | 1 | | 0 |
| | | 1 | 0 | 0 | 1 | 1 | 1 | 0 | 0 | 0 | 0 | | 0 |
| | | | | 1 | 1 | 1 | 1 | 0 | 0 | 0 | 0 | | 0 |
| | | | 1 | 0 | 1 | 1 | 1 | 1 | 0 | 0 | 1 | | 0 |
| | | | | 1 | 1 | 1 | 0 | 1 | 0 | 0 | 1 | | 0 |
| | 1 | 0 | 0 | 0 | 0 | 0 | 1 | 0 | 0 | 0 | 0 | | 1 |
| | | | | 1 | 0 | 0 | 0 | 0 | 0 | 0 | 0 | | 1 |
| | | | 1 | 0 | 1 | 1 | 1 | 0 | 0 | 0 | 0 | | 0 |
| | | | | 1 | 1 | 1 | 1 | 0 | 0 | 0 | 0 | | 0 |
| | | 1 | 0 | 0 | 0 | 0 | 1 | 0 | 0 | 1 | 0 | | 1 |
| | | | | 1 | 0 | 1 | 1 | 0 | 0 | 1 | 0 | | 1 |
| | | | 1 | 0 | 1 | 1 | 1 | 0 | 0 | 0 | 0 | | 0 |
| | | | | 1 | 0 | 1 | 1 | 0 | 0 | 0 | 0 | | 0 |
| 1 | 0 | 0 | 0 | 0 | 0 | 0 | 0 | 0 | 0 | 0 | 0 | | 0 |
| | | | | 1 | 0 | 0 | 0 | 0 | 0 | 0 | 0 | | 0 |
| | | | 1 | 0 | 1 | 0 | 0 | 0 | 0 | 0 | 0 | | 0 |
| | | | | 1 | 1 | 0 | 0 | 0 | 0 | 0 | 0 | | 0 |
| | | 1 | 0 | 0 | 0 | 1 | 0 | 0 | 0 | 0 | 0 | | 0 |
| | | | | 1 | 0 | 1 | 0 | 0 | 0 | 0 | 0 | | 0 |
| | | | 1 | 0 | 1 | 1 | 0 | 0 | 0 | 0 | 0 | | 0 |
| | | | | 1 | 1 | 1 | 0 | 0 | 0 | 0 | 0 | | 0 |
| | 1 | 0 | 0 | 0 | 0 | 0 | 1 | 0 | 0 | 0 | 0 | | 0 |
| | | | | 1 | 0 | 0 | 1 | 0 | 0 | 0 | 0 | | 0 |
| | | | 1 | 1 | 1 | 0 | 1 | 0 | 0 | 0 | 0 | | 0 |
| | | | | | 1 | 0 | 1 | 0 | 0 | 0 | 0 | | 0 |
| | | 1 | 0 | 0 | 0 | 1 | 1 | 0 | 0 | 0 | 0 | | 0 |
| | | | | 1 | 0 | 1 | 1 | 0 | 0 | 0 | 0 | | 0 |
| | | | 1 | 0 | 1 | 1 | 1 | 0 | 0 | 0 | 0 | | 0 |
| | | | | 1 | 1 | 1 | 1 | 0 | 0 | 0 | 0 | | 0 |

Fig. 9.

Europäisches
Patentamt

**EUROPÄISCHER RECHERCHENBERICHT**

**0187985**
Nummer der Anmeldung

EP 85 11 6280

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | ELECTRONICS, Band 52, Nr. 8, 12. April 1979, Seiten 134-138, New York, US; J.J. PETRALE: "PROM controller makes fast work of serial jobs" * Insgesamt * | 1-4 | G 05 B 19/04 |
| | --- | | |
| X | ELECTRONIC DESIGN, Band 14, 8. Juli 1971, Seiten 70-71, Rochelle Park, US; W.Z. FLETCHER et al.: "Simplify sequential circuit designs with programmable ROMs" * Insgesamt * | 1,2 | |
| | ----- | | RECHERCHIERTE SACHGEBIETE (Int. Cl.4) G 05 B H 03 K |

Der vorliegende Recherchenbericht wurde für alle Patentansprüche erstellt.

| Recherchenort DEN HAAG | Abschlußdatum der Recherche 01-04-1986 | Prüfer CORNILLIE O.A.R. |
|---|---|---|